# EUROPEAN PATENT APPLICATION

(11) **EP 1 388 850 A1**
(43) Date of publication of application: **11.02.2004**
(21) Application number: 02017521.2
(22) Date of filing: 06.08.2002
(51) Int. Cl.: G11B 7/007, G11B 27/19

(54) **Method for detecting a wobble signal**

(71) Applicant: Deutsche Thomson-Brandt GmbH, 38048 Villingen-Schwenningen (DE)
(72) Inventor: Ballweg, Christof, 78050 Villingen-Schwenningen (DE)
(74) Representative: Thies, Stephan

(57) **Abstract**

The present invention relates to a method for detecting a wobble signal WS.

It is an object of the invention to propose a method for detecting a wobble signal WS within a single wobble period, without the need of additional filtering.

The method comprises the steps of:
comparing an input signal IS comprising the wobble signal WS with a reference signal RS, the reference signal RS corresponding in phase and frequency to the desired wobble signal WS; and
outputting an output signal OS indicating the amplitude and phase of the wobble signal WS.

## Description

The present invention relates to a method for detecting a wobble signal, and further to an apparatus for reading from and/or writing to optical recording media comprising means for performing the method.

Such methods are used, for example, for obtaining address information from wobbled tracks of optical disks. In general, the embossed tracks of optical disks are formed such that they represent an interleaved spiral or concentric circles. Several types of optical disks, such as DVD-RW or DVD-RAM, have embossed tracks which additionally are wobbled in a specific form. This means that the track is not embossed in an approximately straight line, but in meandering lines. The shape of these meandering lines can contain additional information, which can be used inter alia for addressing or write clock generation. Upon playback or recording of an optical disk having wobbled tracks, the information contained in the track wobble, i.e. the wobble signal, has to be detected to allow, for example, identification of a specific position on this optical disk.

DVD+ReWritable (DVD+RW) is an optical disk recording format, which is backward compatible with existing DVD-Video and DVD-ROM drives. DVD+RW disks can, therefore, be played back on standard DVD and DVD-ROM players already on the market. This backward compatibility is achieved, inter alia, by using a high frequency track wobble for storing address information and for enabling write clock generation, and by using phase modulation for encoding the address information within the wobble signal. Upon playback of and recording on optical rewritable disks wobble signals containing the address information have to be detected. This is quite difficult, especially in recorded areas of a disk. The wobble signal is superimposed with high frequency data signals, which have to be sufficiently suppressed. A solution for this problem has been proposed by van Vlerken et al.: *Format Detection for DVD+ReWritable* 4.7 GB. 2000 Digest of Technical Papers, International Conference on Consumer Electronics, pp.162-3. The solution uses a phase sensitive rectification with a subsequent integration to detect the wobble signal. Though the solution is reliable, it has the disadvantage that the signal has to be filtered to suppress interfering signal parts and, to guarantee signal detection, the integration has to be performed over several signal periods.

It is, therefore, an object of the invention to propose a method for detecting a wobble signal within a single wobble period, without the need of additional filtering.

According to the invention, the method comprises the steps of:
comparing an input signal comprising the wobble signal with a reference signal, the reference signal corresponding in phase and frequency to the desired wobble signal; and
outputting an output signal indicating the amplitude and phase of the wobble signal. The method has the advantage that it is very reliable. At the same time, the method can easily be implemented with only little additional circuitry.

Favourably, the comparing step comprises the step of generating a sum signal and a difference signal of the input signal and the reference signal. Depending on the relative phase between the input signal and the reference signal, one of the operations delivers a signal with a large amplitude, while the other operation delivers a signal with a small amplitude. By comparing both signals, the relative phase between the wobble signal contained in the input signal and the reference signal can be obtained.

Advantageously, the comparing step further comprises the step of further processing said sum signal and said difference signal to obtain a processed sum signal and a processed difference signal. Further processing both signals has the advantage that any ambiguities of the output signal with regard to the relative phase between the wobble signal contained in the input signal and the reference signal can be avoided. Ambiguities might arise if, for example, the output signal would be the same for two or more values of the relative phase between the signals.

Favourably, the further processing comprises absolute value calculation. Absolute value calculation is advantageous since only additions and subtractions are needed for this purpose, which can easily be implemented. At the same time any ambiguities are avoided. The method delivers signals with a larger amplitude and less noise than the solution according to prior art. The reliability of this solution is, therefore, less dependent on the signal-to-noise ratio of the input signal.

Alternatively, the further processing comprises phase sensitive rectification. This has the advantage that phase sensitive rectification is a well established technique for the specific purpose.

According to the invention, the comparing step further comprises the step of generating a further difference signal of said processed sum signal and said processed difference signal. Generating this further difference signal is the easiest way to compare a processed sum signal and the processed difference signal. The further difference signal depends directly on the relative phase between the wobble signal contained in the input signal and the reference signal.

Advantageously, the comparing step further comprises the step of integrating said further difference signal or said processed sum signal and said processed difference signal over a single wobble period. By integrating over a single wobble period, the integral value is proportional to the amplitude of the input signal. In this way also the signal amplitude of the wobble signal can be easily obtained. The sign of the output signal indicates the phase of the input signal. Due to the proportionality of.the output signal to the amplitude of the input signal, the output signal can also be used for controlling the amplitude of the input signal.

Favourably, the method according to the invention further comprises the step of calculating the reference signal. The reference signal can easily be calculated using the phase within the wobble period as an input parameter. This information can be obtained from a PLL (Phase Locked Loop) locked into the wobble signal. For calculating a sine or cosine reference signal the CORDIC algorithm could be used.

Alternatively, the method according to the invention further comprises the step of storing the reference signal in a look-up table. If the PLL is realized digitally, it is known at which places within the signal the signal is sampled. The corresponding reference values can be stored in a look-up table. If, for example, the wobble signal is sampled 32 times within a wobble period, the look-up table contains 32 entries.

According to a further aspect of the invention, a method for detecting a wobble signal comprises performing the inventive method in parallel for a plurality of reference signals having different wobble frequencies. In case of high density optical disks, information is preferably encoded in the wobble signal using a plurality of different wobble frequencies, especially three different wobble frequencies. Performing the inventive method with each of these frequencies in parallel allows to reliably detect the encoded information.

Advantageously, an apparatus for reading from and/or writing to recording media comprises means for performing a method according to the invention. Such an apparatus is very reliable with regard to detection of wobble signals. Even in recorded areas of an optical recording medium the address information is securely retrieved.

For a better understanding of the invention, exemplary embodiments are specified in the following description of advantageous configurations with reference to the figures. It is understood that the invention is not limited to these exemplary embodiments and that specified features can also expediently be combined and/or modified without departing from the scope of the present invention. In the figures:
- Fig. 1: shows a wobble signal as described in the DVD+RW standard;
- Fig. 2: shows a block diagram of a method according to the invention;
- Fig. 3: shows a block diagram of a further embodiment of the invention; and
- Fig. 4: shows an apparatus for reading from and/or writing to optical recording media comprising means for performing the inventive method.

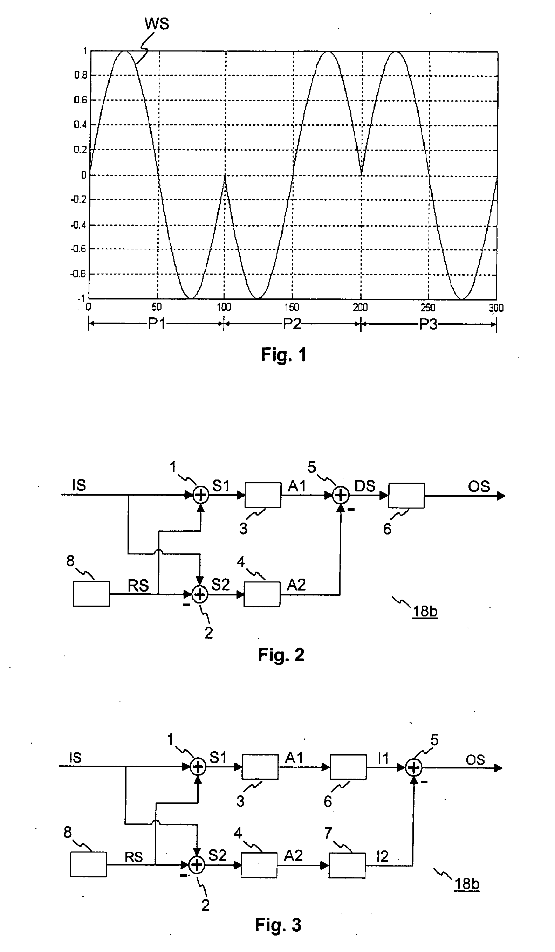

The track wobble of a DVD+RW disk is basically a monotone sinusoidal wave. Only a small part of the track wobble is phase modulated and contains address bits, auxiliary data bits and parity bits. This part is known as address in pregroove (ADIP). Fig. 1 shows the wobble signal WS of this ADIP part over 3 wobble periods P1, P2, P3. As can be seen from the figure, the wobble signal WS in the second wobble period P2 is inverted and constitutes a negative wobble. The sequence of positive and negative wobbles is used for encoding the information in the ADIP. For decoding this information, positive and negative wobbles have to be securely detected.

Fig. 2 shows a block diagram of a method according to the invention. An input signal IS is compared with a reference signal RS, which is generated by a reference signal generator 8, and which in phase and frequency corresponds to the desired wobble signal. For this purpose an adder 1 adds the input signal IS and the reference signal RS to generate the sum signal S1 An adder 2 adds the input signal IS and the negative reference signal RS to obtain a difference signal S2. Depending on the relative phase between the input signal IS and the reference signal RS one of both signals S1 S2 has a comparably large value, while the other signal S2, S1, has a comparably small value. This effect is most pronounced if the input signal IS is in phase with the reference signal RS or if the phase between the signals Is, RS is an integer multiple of π. Two absolute value calculators 3, 4, which are locked to the wobble signal WS, calculate the absolute value signal A1 of the sum signal S1 and the absolute value signal A2 of the difference signal S2, respectively. A further adder 5 adds the absolute value signal A1 of the sum signal S1 and the negative absolute value signal A2 of the difference signal S2 to generate a further difference signal DS. This further difference signal DS is integrated over a wobble period by an integrator 6 to obtain an output signal OS. After integration the output signal has a value, which depends in amplitude and phase from the wobble signal WS contained in the input signal IS.

Fig. 3 shows a block diagram of a further embodiment of the invention. Instead of integrating the further difference signal DS, two integrators 6, 7 are used for integrating the absolute value signal A1 of the sum signal S1 and the absolute value signal A2 of the difference signal S2, respectively. In this way two integration signals I1 and I2 are obtained and form the basis for the output signal OS. The output signal OS is generated by adding the first integration signal I1 and the negative second integration signal I2 with the adder 5.

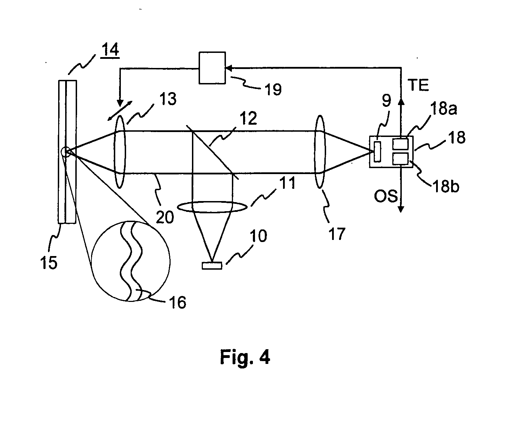

Fig. 4 shows an apparatus for reading from and/or writing to optical recording media 14. The apparatus comprises means 18b for performing a method according to the invention for obtaining an output signal OS, which allows to decode the information contained in a wobbled track 16 of the optical recording medium 14. The scanning light beam 20 which is emitted from a light source 10 is collimated by a collimator 11, and is diverted by means of a beam splitter 12. An objective lens 13 focuses the scanning beam 20 onto the wobbled track 16 of a layer 15 of the optical recording medium 14 which carries information. The scanning beam 20 reflected from the layer 15 which carries the information is collimated by the objective lens 13 and is imaged onto a photodetector 9 by means of an imaging unit 17. The signals from the photodetector 9 are evaluated by an evaluation unit 18. The evaluation unit comprises means 18a for generating a tracking error signal TE, which is supplied to a tracking regulator 19 ensuring that the scanning beam 20 moves as close as possible to the track centre of the wobbled track 16. The evaluation unit further comprises means 18b for detecting the wobble signal WS and for generating the output signal OS, which is needed for decoding the information contained in the wobble signal WS.

## Claims

1. Method for detecting a wobble signal, **characterized in that** it comprises the steps of:
comparing an input signal (IS) comprising the wobble signal (WS) with a reference signal (RS), the reference signal (RS) corresponding in phase and frequency to the desired wobble signal; and
outputting an output signal (OS) indicating the amplitude and the phase of the wobble signal. **characterized in that** the

2. Method according to claim 1, **characterized in that** the comparing step comprises the step of
generating a sum signal (S1) and a difference signal (S2) of the input signal (IS) and the reference signal (RS).

3. Method according to either of claims 2 or 3, **characterized in that** the comparing step further comprises the step of
further processing said sum signal (S1) and said difference signal (S2).

4. Method according to claim 3, **characterized in that** the further processing comprises one of absolute value calculation and phase sensitive rectification.

5. Method according to any of claims 3-4, **characterized in that** the comparing step further comprises the step of generating a further difference signal (DS) of said processed sum signal (S1) and said processed difference signal (S2).

6. Method according to any of claims 3-5, **characterized in that** the comparing step further comprises the step of integrating said further difference signal (DS) or said further processed sum signal (A1) and said further processed difference signal (A2) over a wobble period.

7. Method according to any of claims 1-6, further comprising the step of
calculating the reference signal (RS).

8. Method according to any of claims 1-6, further comprising the step of
storing the reference signal (RS) in a table.

9. Method for detecting a wobble signal, **characterized in that** it comprises performing a method according to any of claims 1-8 in parallel for a plurality of reference signals (RS) having different wobble frequencies.

10. Apparatus for reading from and/or writing to recording media, **characterized in that** it comprises means for performing a method according to any of claims 1-9.
